(19)

Europäisches Patentamt
European Patent Office
Office européen des brevets

(11) **EP 4 365 631 A1**

(12) **EUROPEAN PATENT APPLICATION**

(43) Date of publication:
**08.05.2024 Bulletin 2024/19**

(21) Application number: **22205597.2**

(22) Date of filing: **04.11.2022**

(51) International Patent Classification (IPC):
**G01S 13/60** *(2006.01)*   **G01S 13/87** *(2006.01)*
**G01S 13/931** *(2020.01)*   **G01S 7/295** *(2006.01)*

(52) Cooperative Patent Classification (CPC):
**G01S 13/874; G01S 13/605; G01S 13/876;**
G01S 7/2955; G01S 2013/932

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
• **Janosy, Bence
 1103 Budapest (HU)**
• **Mezey, Eors
 2096 Üröm (HU)**
• **Leichner, David Balint
 1094 Budapest (HU)**
• **Kaptas, Andras
 1103 Budapest (HU)**

(54) **A RADAR SYSTEM FOR 3D EGO MOTION ESTIMATION**

(57)    The invention relates to a radar-based system (10) in a vehicle (1) for driver assistance or automated driving, comprising a processor configured to: receive signals from at least one sensor (3, 3a, 3b, 3c) of the vehicle (1) configured to detect an object (T1-T9) outside the vehicle (1), wherein the signals comprise position information and a radial velocity of each of at least three objects (T1-T9) relative to the at least one sensor (3, 3a, 3b, 3c), and determine a velocity of the vehicle (1) based on the received signals.

**Fig. 2**

EP 4 365 631 A1

**Description**

The present invention relates to a radar-based system in a vehicle for driver assistance or automated driving, a vehicle, a computer-implemented method for driver assistance or automated driving for a vehicle, a computer program and a computer-readable storage medium.

**Description of the Prior Art**

An automotive 3D radar does not always correctly provide for radar ranging and direction in three dimensions. Thus, calibration data are important to a 3D radar of an ego vehicle for providing correction of measured data or performing uncertainty calculations. In order to provide calibration data for a 3D radar in any moving state of a vehicle, full 3D motion data including three axes linear velocities and three axes angular velocities as ground truth are required.

Advanced inertial measurement units, IMUs, such as cost-intensive ADMA sensors are capable of measuring the vehicle motion in three axes, even during GPS signal loss. They provide dynamic attitude and heading angle determination, as well as precise acceleration, speed and position data.

However, ADMA sensors are considerably expensive. On vehicles which are not equipped with an ADMA sensor, it is difficult to provide continuous and precise calibration data for 3D radars.

In addition, sometimes even if a self-driving vehicle is already equipped with ADMA sensors, it is still desired to have an alternative 3D ego motion sensing approach as a validation of the actual preformed radar calibration.

US 2021/0124033 A1 discloses a method for calibrating a vehicle sensor of a motor vehicle. The method includes the steps: ascertaining, by way of the vehicle sensor, sensor data at a plurality of measurement times, the motor vehicle moving in relation to objects in surroundings of the motor vehicle; computing object positions of the objects on the basis of the ascertained sensor data; computing a Hough transformation on the basis of the computed object positions; ascertaining an alignment of the vehicle sensor in relation to a driving axis of the motor vehicle on the basis of the computed Hough transformation; and calibrating the vehicle sensor on the basis of the ascertained alignment of the vehicle sensor in relation to the driving axis of the motor vehicle.

US 2017/0212215 A1 discloses a method and an apparatus for determining misalignment of a radar sensor unit mounted to a vehicle, including providing targets on an alignment apparatus. A vehicle is located at predetermined location on a test station an exact given distance from the alignment apparatus. The actual locations and distances of the targets from each other and from radar sensor unit of the vehicle at the test station are known and pre-stored. At least one target is a greater distance from the vehicle than the other targets. The targets receive and return a radar wave from the radar sensor unit. The radar sensor unit determines locations and distances of the targets and compares with the given or actual locations and distances of the targets to determine misalignment of the radar sensor unit. A calibration program automatically calibrates azimuth and elevation to adjust for misalignment.

**Disclosure of the Invention**

The present invention provides a radar-based system in a vehicle for driver assistance or automated driving according to claim 1, a vehicle according to claim 5, a computer-implemented method for driver assistance or automated driving for a vehicle according to claim 6, a computer program according to claim 9, and a computer-readable storage medium according to claim 10.

Further advantageous embodiments and improvements of the invention are listed in the dependent claims.

**Advantages of the Invention**

The invention provides, according to a first aspect, a radar-based system in a vehicle for driver assistance or automated driving, comprising a processor configured to: receive signals from at least one sensor of the vehicle configured to detect an object outside the vehicle, wherein the signals comprise position information and a radial velocity of each of at least three objects relative to the at least one sensor, and determine a velocity of the vehicle based on the received signals.

It is favorable that if there is a plurality of stationary objects, in particular more than two stationary objects around a 3D radar of an ego vehicle which moves in a straight line, the radar can dynamically estimate its own velocity vector without any time-consuming object tracking. The 3D velocity corresponding to the velocity vector can be calculated from a single measurement which contains 3D positions information and Doppler/radial velocities of targets/objects.

The relative velocity of a stationary target is the additive inverse of the velocity of the moving radar. In a single measurement, this velocity will be the same for all the stationary targets. Thus, an equation system can be used for each measured point corresponding to the detected target/object. This equation system is linear for the elements of the velocity vector, such that they can be estimated with linear regression.

The 3D velocity vector contains three unknown variables, which means that at least three standstill targets have to be measured in a single radar shot to perform the estimation process. Considering the existence of measurement errors, it is advantageous to involve more stationary objects as measured points in order to achieve a more precise solution, because the linear regression provides the optimal solution (with a minimal mean square error).

In a preferable embodiment, the processor is further configured to: receive signals from each of at least three sensors of the vehicle configured to detect an object outside the vehicle, wherein the signals from each of the at least three sensors comprise position information and a radial velocity of each of at least three objects relative to the respective sensor, and determine a linear velocity and an angular velocity of the vehicle based on the received signals, a relative position of each of the at least three sensors to the vehicle, and a rotation matrix from the vehicle to each of the at least three sensors.

If a vehicle is not in the straight moving state, but is turning and/or starting going uphill/downhill and/or encountering mounting roads or construction sites where roads are not quite smooth, the vehicle has not only linear velocities, but also angular velocities, the measured data of which may also need to be corrected as well.

In this case, another equation system can be used for an ego vehicle comprising at least three radar sensors, especially that each sensor can detect three different stationary objects around the vehicle. Thereby, elements of the linear velocity vector and the angular velocity vector can be estimated by a linear regression on this equation system with the help of the standstill objects data measured by at least three synchronized radars.

In other words, in an environment which contains many standstill targets, a vehicle can estimate its full 3D ego motion state by three mounted radars using the solution provided by the present invention.

Besides, the present invention provides an alternative 3D ego motion sensing approach as a validation of the actual radar calibration performed by e.g. ADMA sensors of a self-driving vehicle.

In a further preferable embodiment, the position information comprises an azimuth, an elevation and a distance of an object relative to the respective sensor.

In a further preferable embodiment, the angular velocity of the vehicle comprises a yaw angle and/or a pitch angle.

In most cases, if a vehicle is on the road, but does not move straight forward/backward, it turns then left, right or around. In this regard, the yaw angle as one of the motion data of the vehicle is measured, and the measured yaw angle has to be corrected if necessary. On rural roads for instance, a vehicle may frequently encounter upslope and downslope. In this case, the pitch angle is measured, and the measured pitch angle has to be corrected if necessary. In some undeveloped areas outside a city such as in a field, or in construction sites, the vehicle runs with jolts or on a bumpy road. In this case, the roll angle is measured, and the measured roll angle has to be corrected if necessary. The last case may be less frequently to be met than the previously mentioned both cases. Thus, this embodiment of the present invention mainly focuses on calibrating the measured yaw angle and/or pitch angles, in order to accelerate the calibration process. However, the calibration of measured roll angles of a vehicle is also part of the solution of the present invention.

The invention further provides, according to a second aspect, a vehicle comprising a sensor configured to detect an object outside the vehicle and a radar-based system according to the first aspect of the invention.

The invention further provides, according to a third aspect, a computer-implemented method for driver assistance or automated driving for a vehicle comprising a radar-based system, comprising the steps of: receiving signals from at least one sensor of the vehicle configured to detect an object outside the vehicle, wherein the signals comprise position information and a radial velocity of each of at least three objects relative to the at least one sensor, and determining a velocity of the vehicle based on the received signals.

In a preferable embodiment of the computer-implemented method, the receiving signals from at least one sensor of the vehicle configured to detect an object outside the vehicle comprises: receiving signals from each of at least three sensors of the vehicle configured to detect an object outside the vehicle, wherein the signals from each of the at least three sensors comprise position information and a radial velocity of each of at least three objects relative to the respective sensor, and the determining a velocity of the vehicle based on the received signals comprises: determining a linear velocity and an angular velocity of the vehicle based on the received signals, a relative position of each of the at least three sensors to the vehicle, and a rotation matrix from the vehicle to each of the at least three sensors.

In a further preferable embodiment of the computer-implemented method, the position information comprises an azimuth, an elevation and a distance of an object relative to the respective sensor.

The invention further provides, according to a fourth aspect, a computer program comprising instructions which, when the program is executed by a computer, cause the computer to carry out the method according to the third aspect of the invention.

The invention further provides, according to a fifth aspect, a computer-readable storage medium, wherein the computer-readable storage medium stores a computer program; and when the computer program is executed by a computer, the computer is enabled to implement the method according to the third aspect of the invention.

**Brief Description of the Drawings**

Further advantageous details and features may be taken from the following description of several exemplary embodiments of the invention in conjunction with the drawings, in which:

Fig. 1    schematically shows a vehicle comprising a radar measuring three objects/targets, in an embodiment of the present invention;

Fig. 2    schematically shows a vehicle comprising three radars measuring nine objects/targets, in an embodiment of the present invention;

Fig. 3    schematically shows an ego vehicle comprising an embodiment of a radar-based system of the present invention;

Fig. 4    shows a block diagram of an embodiment of the computer-implemented method of the present invention;

Fig. 5    shows a block diagram of an embodiment of the inventive computer program comprising instructions which, when the program is executed by a computer, cause the computer to carry out the embodiment of the inventive method according to Fig. 4; and

Fig. 6    shows a block diagram of an embodiment of the inventive computer-readable storage medium, wherein the computer-readable storage medium stores a computer program; and when the computer program is executed by a computer, the computer is enabled to implement the embodiment of the inventive method according to Fig. 4.

**Embodiments of the Invention**

It is to be understood that the terms used herein are for purpose of describing individual embodiments and are not intended to be limiting. Unless otherwise defined, all technical and scientific terms used herein have the meaning which corresponds to the general understanding of the skilled person in the relevant technical field of the present disclosure; they are to be understood neither too far nor too narrow.

In addition, it should be noted that the terms "a/an", "one", "two", "three" etc. used in the claims and/or the description are not to be understood as number words, but rather as a non-exhaustive number indication for the scope of protection. For example, the term "an ABC" is meant to mean "at least one ABC". However, it also applies to the described content of the present invention that the terms "one" "two", "three" etc. used in the claims and the description are also disclosed as number words and are thus also co-disclosed as number indications to be considered conclusively.

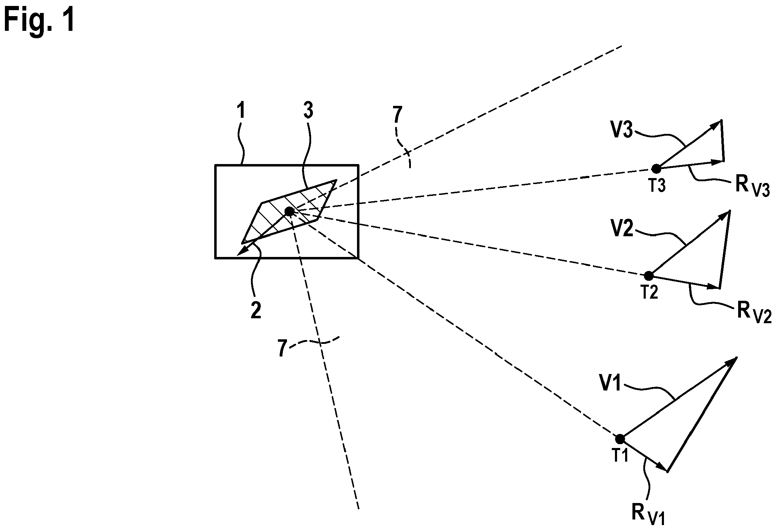

Fig. 1 schematically shows a vehicle 1 comprising a radar sensor 3 comprising a detection range 7 and measuring three standstill objects/targets T1-T3, in an embodiment of the present invention. In a single measurement, the relative velocities V1-V3 of the stationary targets T1-T3 to the radar are the same and correspond to the additive inverse of the velocity 2 of the moving radar 3 / vehicle 1.

If the ego vehicle 1 moves in a straight line, the vehicle 1 has only linear velocity vector, but no angular velocity vector. The following formula can be used to estimate the ego motion of the vehicle 1 based on the measured targets T1-T3:

$$\text{dot}(Position, -Velocity) = Radial\_Velocity * |Position| \qquad \text{Formula 1,}$$

wherein *dot()* represents the dot product of two vectors. *Position* is the 3D position vector of the respective target, relative to the radar 3, converted from radar's angular-based measurement on the target such as the elevation, azimuth and distance of the target relative to the radar 3. *Radial_Velocity* is the radial component of the relative velocity (V1-V3) of the respective target, denoted by reference signs $R_{V1}$-$R_{V3}$ in Fig. 1.

According to the algebraic definition of the dot product, given *Position* being the 3D vector of target T1 as [a1, a2, a3], and *Velocity* being the velocity of the vehicle 1 as [x, y, z], formula 1 would be

$$a1*x+a2*y+a3*z = Radial\_Velocity * |Position|.$$

Since *Position* and *Radial_Velocity* of target T1 can be directly measured or calculated by the radar 3, the product of *Radial_Velocity* * |Position| is a constant, denoted by a symbol A1, which results in a further transformed formula 1 as a1*x+a2*y+a3*z = A1.

In this transformed formula 1, there are three unknown variables x, y and z. In order to solve the equation, at least the three targets T1-T3 have to be measured in a single radar shot. Considering the possibility of measurement errors, it is advantageous to involve more stationary targets as measured points in order to achieve a more precise solution, because the linear regression provides the optimal solution (with a minimal mean square error).

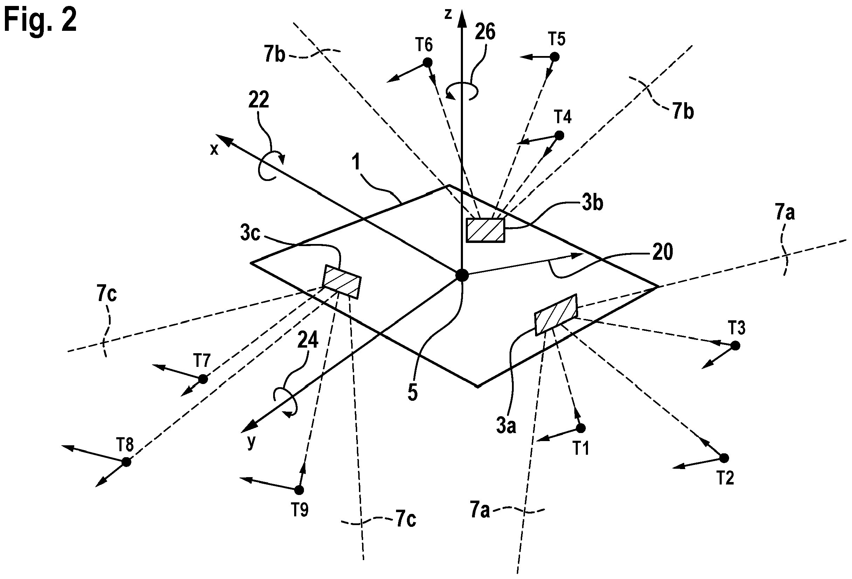

Fig. 2 schematically shows a vehicle 1 comprising three radars 3a-3c mounted on the hull of the vehicle 1, each measuring three objects/targets T1-T3, T4-T6, T7-T9, respectively, in an embodiment of the present invention. In the example shown in Fig. 2, the vehicle 1 is not moving straight. Thus, the angular velocity vector thereof (i.e. [roll angle 22, pitch angle 24, yaw angle 26]) also needs to be taken into account when estimating the full 3D ego motion state of the vehicle 1.

Since radars 3a-3c are mounted on the vehicle 1 as a rigid body, in a single measurement, they have the same linear velocity vector as the vehicle 1 (which is represented by a reference point 5) which is denoted by reference sign 20 in Fig. 2. Same as the embodiment shown in Fig. 1, the relative velocities of the stationary targets T1-T9 to their respective radar are the same and correspond to the additive inverse of the velocity 20 of the moving radars 3a-3c / vehicle 1.

The velocity of a stationary object T1-T9 in the point of view of the respective hull-mounted radar can be calculated with the following formula:

$$\text{Velocity} = \text{Radar\_orientation} * (\text{V\_hull} + \text{M\_rolling} * (\text{Radar\_orientation}^{-1} *$$
$$\text{Position} + \text{Radar\_position}))$$
$$\text{Formula 2,}$$

wherein *V_hull* is the 3D velocity vector of the vehicle 1 in its reference point 5. *Radar_position* is the relative position of the radar 3a-3c to the vehicle's reference point 5. *Radar_orientation* is the 3D rotation matrix from the vehicle's reference point 5 to the radar's orientation. *M_rolling* is a 3x3 matrix which contains the three axis angular velocities (i. e. roll angle 22, pitch angle 24 and yaw angle 26) of the vehicle 1:

$$M\_rolling = \begin{pmatrix} 0 & -yaw & pitch \\ yaw & 0 & -roll \\ -pitch & roll & 0 \end{pmatrix}.$$

*V_hull* being the 3D velocity vector of the vehicle (Vx, Vy, Vz) and the angular velocities 22, 24, 26 in the matrix of *M_rolling* can be estimated by a linear regression on formula 2 using the data of the standstill points T1-T9 measured by the three synchronized radars 3a-3c.

Thereby, in an environment which contains many standstill targets, a vehicle can estimate its full 3D ego motion state by three mounted radars. Considering the possibility of measurement errors, it is advantageous to involve more stationary targets as measured points in order to achieve a more precise solution, because the linear regression provides the optimal solution (with a minimal mean square error).

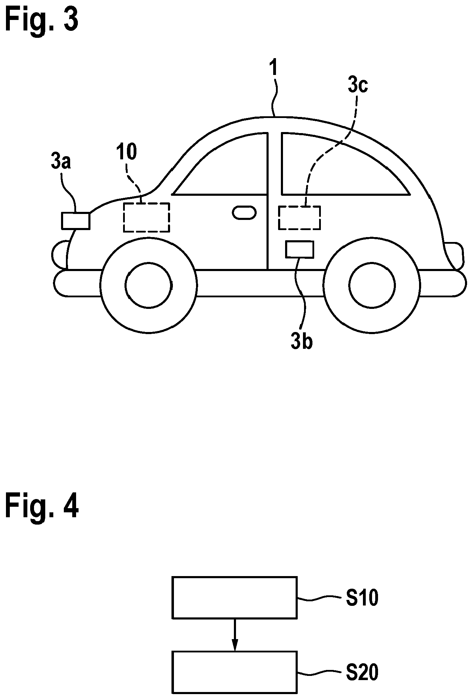

Fig. 3 schematically shows an ego vehicle 1 comprising three hull-mounted radar sensors 3a, 3b, 3c and a radar-based system 10 for driver assistance or automated driving of the present invention. The system 10 comprises a processor configured to: receive signals from each of at least three sensors 3a, 3b, 3c of the vehicle 1 configured to detect an object outside the vehicle, wherein the signals from each of the at least three sensors 3a, 3b, 3c comprise position information and a radial velocity of each of at least three objects relative to the respective sensor, and determine a linear velocity and an angular velocity of the vehicle 1 based on the received signals, a relative position of each of the at least three sensors 3a, 3b, 3c to the vehicle 1, and a rotation matrix from the vehicle 1 to each of the at least three sensors 3a, 3b, 3c.

The embodiment of the inventive computer-implemented method for driver assistance or automated driving for a vehicle comprising a radar-based system shown in Fig. 4 comprises steps S10 and S20. In the step S10, signals are received from at least one sensor of the vehicle configured to detect an object outside the vehicle, wherein the signals comprise position information and a radial velocity of each of at least three objects relative to the at least one sensor. In the step S20, a velocity of the vehicle is determined based on the received signals.

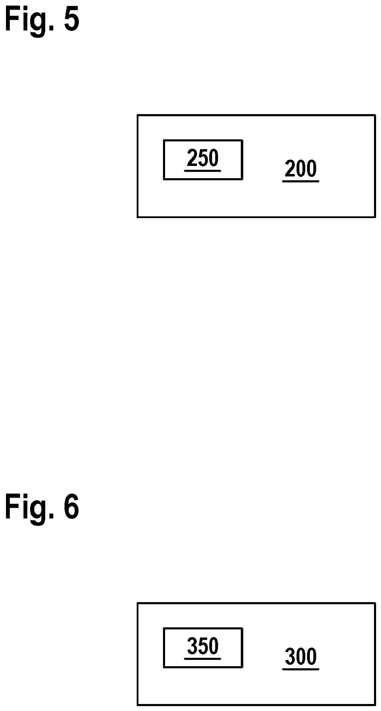

The embodiment of the inventive computer program 200 shown in Fig. 5 comprises instructions 250 which, when the program 200 is executed by a computer, cause the computer to carry out the embodiment of the inventive method shown in Fig. 4.

The embodiment of the inventive computer-readable storage medium 300 shown in Fig. 6 stores a computer program 350. When the computer program 350 is executed by a computer, the computer is enabled to implement the embodiment of the inventive method shown in Fig. 4.

The invention is described and illustrated in detail by the preferable embodiments mentioned above. However, the invention is not limited by the disclosed examples, and other variations can be derived therefrom while still being inside the protection scope of the invention.

**Claims**

1.  Radar-based system (10) in a vehicle (1) for driver assistance or automated driving, comprising a processor configured to:
    receive signals from at least one sensor (3, 3a, 3b, 3c) of the vehicle (1) configured to detect an object (T1-T9) outside the vehicle (1), wherein the signals comprise position information and a radial velocity of each of at least three objects (T1-T9) relative to the at least one sensor (3, 3a, 3b, 3c), and determine a velocity of the vehicle (1) based on the received signals.

2.  Radar-based system (10) according to claim 1, wherein the processor is further configured to:

    receive signals from each of at least three sensors (3a, 3b, 3c) of the vehicle (1) configured to detect an object outside the vehicle (1), wherein the signals from each of the at least three sensors (3a, 3b, 3c) comprise position information and a radial velocity of each of at least three objects (T1-T9) relative to the respective sensor (3a, 3b, 3c), and
    determine a linear velocity and an angular velocity of the vehicle (1) based on the received signals, a relative position of each of the at least three sensors (3a, 3b, 3c) to the vehicle (1), and a rotation matrix from the vehicle (1) to each of the at least three sensors (3a, 3b, 3c).

3.  Radar-based system (10) according to claim 1 or 2, wherein the position information comprises an azimuth, an elevation and a distance of an object relative to the respective sensor (3, 3a, 3b, 3c).

4.  Radar-based system (10) according to any of the preceding claims, wherein the angular velocity of the vehicle (1) comprises a yaw angle (26) and/or a pitch angle (24).

5.  Vehicle (1) comprising a sensor (3, 3a, 3b, 3c) configured to detect an object (T1-T9) outside the vehicle (1) and a radar-based system (10) according to any of the preceding claims.

6.  Computer-implemented method for driver assistance or automated driving for a vehicle comprising a radar-based system, comprising the steps of:

    receiving (S10) signals from at least one sensor of the vehicle configured to detect an object outside the vehicle, wherein the signals comprise position information and a radial velocity of each of at least three objects relative to the at least one sensor, and
    determining (S20) a velocity of the vehicle based on the received signals.

7.  Computer-implemented method according to claim 6, wherein

    the receiving (S10) signals from at least one sensor of the vehicle configured to detect an object outside the vehicle comprises:
    receiving signals from each of at least three sensors of the vehicle configured to detect an object outside the vehicle, wherein the signals from each of the at least three sensors comprise position information and a radial velocity of each of at least three objects relative to the respective sensor, and
    the determining (S20) a velocity of the vehicle based on the received signals comprises:
    determining a linear velocity and an angular velocity of the vehicle based on the received signals, a relative position of each of the at least three sensors to the vehicle, and a rotation matrix from the vehicle to each of the at least three sensors.

8.  Computer-implemented method according to claim 6 or 7, wherein the position information comprises an azimuth, an elevation and a distance of an object relative to the respective sensor.

9.  Computer program (200) comprising instructions (250) which, when the program (200) is executed by a computer, cause the computer to carry out the method of any of the claims 6 to 8.

10. Computer-readable storage medium (300), wherein the computer-readable storage medium (300) stores a computer program (350); and when the computer program (350) is executed by a computer, the computer is enabled to implement the method according to any one of claims 6 to 8.

# Fig. 1

Fig. 2

EP 4 365 631 A1

# Fig. 3

# Fig. 4

# Fig. 5

```
┌─────────────────────────────┐
│  ┌──────────┐               │
│  │   250    │      200      │
│  └──────────┘               │
└─────────────────────────────┘
```

# Fig. 6

```
┌─────────────────────────────┐
│  ┌──────────┐               │
│  │   350    │      300      │
│  └──────────┘               │
└─────────────────────────────┘
```

Europäisches
Patentamt

European
Patent Office

Office européen
des brevets

# EUROPEAN SEARCH REPORT

**Application Number**

EP 22 20 5597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/104259 A1 (OCULII CORP [US]) 19 May 2022 (2022-05-19) * paragraphs [0028], [0036], [0037], [0039], [0071] – [0095], [0106], [0110], [0111]; figure 4A * | 1-10 | INV. G01S13/60 G01S13/87 ADD. G01S13/931 G01S7/295 |
| X | DE 10 2013 016282 A1 (DAIMLER AG [DE]) 19 March 2015 (2015-03-19) * the whole document * | 1-10 | |
| X | EP 3 495 840 A1 (VOLKSWAGEN AG [DE]) 12 June 2019 (2019-06-12) * the whole document * | 1-10 | |
| X | EP 4 043 920 A1 (SONY GROUP CORP [JP]) 17 August 2022 (2022-08-17) * the whole document * | 1-10 | |

**TECHNICAL FIELDS SEARCHED (IPC)**

G01S

The present search report has been drawn up for all claims

| Place of search | Date of completion of the search | Examiner |
|---|---|---|
| Munich | 23 March 2023 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 5597

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2023

| Patent document cited in search report | | Publication date | Patent family member(s) | | Publication date |
|---|---|---|---|---|---|
| WO 2022104259 | A1 | 19-05-2022 | NONE | | |
| DE 102013016282 | A1 | 19-03-2015 | NONE | | |
| EP 3495840 | A1 | 12-06-2019 | DE 102017221691 | A1 | 06-06-2019 |
| | | | EP 3495840 | A1 | 12-06-2019 |
| | | | US 2019171224 | A1 | 06-06-2019 |
| EP 4043920 | A1 | 17-08-2022 | EP 4043920 | A1 | 17-08-2022 |
| | | | US 2022261008 | A1 | 18-08-2022 |

For more details about this annex : see Official Journal of the European Patent Office, No. 12/82

**EP 4 365 631 A1**

**Patent documents cited in the description**

- US 20210124033 A1
- US 20170212215 A1